# EUROPEAN PATENT SPECIFICATION

(11) **EP 0 550 786 B1**
(45) Date of publication and mention of the grant of the patent: **17.09.1997**
(21) Application number: 92100289.5
(22) Date of filing: 09.01.1992
(51) Int. Cl.: C13D 3/06

(54) **Method and apparatus for producing sugar with reclaiming and recycling of carbonation scum**
Verfahren und Vorrichtung zur Herstellung von Zucker unter Rückgewinnung und Rückführung des Carbonatationsschaums
Procédé et appareil pour la production de sucre avec régénération et recyclage de l'écume de carbonatation

(43) Date of publication of application: 14.07.1993
(73) Proprietor: LIMEX, Hradec Kralové (CS)
(72) Inventor: Moc, Dalibor, Hradec Králové (CS); Zaruba, Jaroslav, Hradec Králové (CS)
(74) Representative: Beetz & Partner Patentanwälte

(56) References cited:
- BE-A- 693 979
- FR-A- 1 303 186
- US-A- 3 542 591
- DATABASE WPIL Section Ch, Week 8939, Derwent Publications Ltd., London, GB; Class D17, AN 89-283697 (39) & SU-A-1 442 552 (MOSC FOOD IND TECHN) 7 December 1988

## Description

The invention relates to a method and an apparatus for producing sugar with reclaiming and recycling of carbonation scum, comprising a new process and apparatus concept for epuration line plants of sugar factories, which enable the scum coming from the first carbonation to be reused on such a line.

In processes of sugar juice clarification there hitherto have been used calcium hydroxide in the form of lime milk and subsequently carbon dioxide in combination with the so-called carbonation gas. In one of the essential chemical reactions accompanying the first sugar juice carbonation, secondary insoluble calcium carbonate is formed onto the surface of which other chemical substances such as non-sugar compounds are absorbed which are present in dissolved form in the sugar juice. Lime milk and carbon dioxide are manufactured in sugar factories by burning limestone (CaCO₃) which decomposes into calcium oxide and carbon dioxide. After having been used for the sugar juice clarification, these two substances are subjected again to a chemical reaction to give calcium carbonate (CaCO₃). Such an epuration reaction is well-known in the sugar industry.

In the epuration line plants, the obtained calcium carbonate, viz. the so-called carbonation scum, has heretofore been separated from the process by filtering and decanting while being subjected to a zero or multiple recirculation on the epuration line without being regenerated, in order to improve the filtering properties of carbonated juice. Calcium carbonate generated in the first carbonation serves here as non-sugar substance vehicle and is removed together with these substances from the epuration line.

The processes as hereinabove referred to, however, are considerably expensive, owing to a relatively high consumption of raw materials necessary for the manufacture of burnt lime, lime milk and carbonation scum, which fact, due to the limestone production and sugar factory waste processing, negatively influences not only the economical but also the environmental conditions.

FR-A-1 303 186 discloses a method of sugar juice clarification comprising the steps of preliming, liming and carbonating the sugar juice. The carbonation scum is separated by filtration and then again suspended in water. The suspension is fed in two hydrocyclones where it is separated into a calcium carbonate portion which is then dosed into the prelimer and a liquid portion containing the non sugar impurities. FR-A-1 303 186 does not mention any chemical treatment of the separated carbonation scum and is silent with regard to the further treatment of the liquid portion from the hydrocyclones.

In SU-1 442 552 a method for clarifying sugar juice is disclosed comprising the steps of liming, carbonating, separating and washing the resulting carbonation scum. Then a calcium carbonate suspension is separated from a suspenion containing the non-sugar impurities in a hydrocyclone. The calcium carbonate suspension is mixed with lime milk and a solution containing 5 to 20 % saccharose, before it is recirculated into the prelimer. The other suspension containing the non-sugar impurities is also treated with lime milk and subsequently heated to 80 to 95 °C to coagulate and remove the non-sugar impurities from the waste water. Accordingly, also SU-1 442 552 comprises no hint as to a recirculation of waste water into the epuration line.

It is the object of the present invention to overcome the above-mentioned drawbacks of the prior art and to provide a method and an apparatus for producing sugar with reclaiming and recycling of carbonation scum and particularly for the regeneration and recirculation of carbonation scum into the sugar juice epuration line, which are simple and lead to economical savings and improvements regarding a reduced waste material production and environmental advantages as compared with the prior art.

The above object is achieved according to the independent claims. The dependent claims relate to preferred embodiments.

The method of the present invention for producing sugar with reclaiming and recycling of carbonation scum for reusing it in the sugar production, comprises the following steps:
(A) Separating the carbonation scum from the sugar juice after the first carbonation;
(B) diluting a portion or the total amount of the carbonation scum in an amount of up to 100 % of the total amount to a density of 1010 to 1350 kg/m³;
(C) adjusting the pH value of the diluted carbonation scum to 6.0 to 11.2;
(D) separating the treated carbonation scum liquid into a thick portion and a thin portion;
(E) activating the carbonation scum by means of calcium oxide or calcium hydroxide,
   and
(F) dosing a portion or the total amount of the thick portion into the epuration line;
it is characterized in that the thin liquid portion obtained in step (D) is recirculated into the dilution stage (B) in an amount of up to 100 %.

In accordance with a preferred embodiment, the carbonation scum is separated from the sugar juice in step A by filtration and is washed with water for removing sugar substances.

The regenerated carbonation scum may be dosed in step F into the preliming and/or the liming stage and/or the carbonation stage of the sugar juice processing, the regenerated carbonation scum preferably being dosed together with or at the same time as the lime milk addition.

In accordance with a further preferred embodiment, the diluted carbonation scum is carbonated, optionally after processing steps C, D and contingently E, or in step C.

As mentioned above the chemically treated carbonation scum liquid is divided into a thin liquid portion and a thick portion, the thin liquid portion is recirculated into the dilution stage in an amount of between zero and 100 %, and the thick portion is dosed into the epuration line, optionally after activation.

The ratio between the amount of the dosed regenerated carbonation scum and the amount of lime milk also dosed into the epuration line is arbitrary.

The apparatus of the present invention for carrying out the above-described method comprises
- separation means for separating the carbonation scum from the sugar juice after the first carbonation;
- dilution means for diluting the separated carbonation scum, connected to the separation means;
- pH adjusting means for adjusting the pH value of the diluted carbonation scum to a value of 6.0 to 11.2;
- separation means for separating the treated carbonation scum liquid into a thick portion and a liquid portion, connected to the pH adjusting means,
   and
- dosing means for dosing the thick portion of the regenerated carbonation scum into the epuration line,
it is characterized in that
it further comprises a recirculation line connected between the separation means and the dilution means, for recirculating at least a part of the liquid portion of the carbonation scum liquid obtained from the separation means into the dilution means.

In accordance with preferred embodiments, the apparatus may further comprise dividing means for dividing the total amount of carbonation scum obtained from the separation means into a portion to be deposited and a portion to be regenerated and recirculated into the sugar juice epuration line and may also further comprise activation means connected to the separation means, for activating the carbonation scum by means of calcium oxide and/or calcium hydroxide, or lime, respectively.

In accordance with still further advantageous embodiments, the apparatus comprises one or more of the following features:
- The separation means are a filter or a filter press, preferably equipped with means for washing the separated carbonation scum;
- the dividing means comprise a conveyor;
- the dilution means are an agitated tank provided with water and/or recycling liquid supply;
- the pH adjusting means comprise a carbonator;
- the separation means are a hydrocyclone or a combination of two hydrocyclones, preferably with an agitated tank connected between the thick product outlet of the first hydrocyclone and the inlet of the second hydrocyclone;
- the activation means comprise a reactor for contacting or mixing the thick portion of the treated carbonation scum with calcium oxide or calcium hydroxide, or lime, respectively.

In this way a considerable economy in expenses necessary for procuring raw materials for the processing of the carbonation scum, such as burnt lime, lime milk and carbonation gas, is attained. Further advantages are to be seen in the reduction of the entire volume of carbonation scum, the reduction of costs for manipulating it, and, last but not least, the beneficial environmental effect, due to the limited rawstuff production, reduced waste amount and easier waste water treatment.

In practice, the process of this invention is carried out such that the carbonation scum after the first carbonation is, in several successive steps, separated, adjusted as to pH value, freed from adsorbed non-sugar substances, optionally activated and dosed into the epuration line. For the scum regeneration there is used an amount between zero and 100 % of the total scum amount separated by filtering after the first carbonation. The scum is diluted to a density of from 1010 to 1350 kg/m³ while the pH value thereof is adjusted to 6.0 - 11.2, depending on the non-sugar substance quality. The thus regenerated scum is separated from the mother liquor. The separated regenerated scum which possibly has been activated is then dosed into the epuration process together with lime milk, the lime milk amount varying between zero and 100 %, and the scum amount varying between 100 and zero %, based on the total dosed amounts thereof, respectively.

In accordance with a typical embodiment,the method according to the present invention comprises the following successive technological steps wherein the actual parameters of the individual regimes are set forth:
(a) Calcium carbonate is removed from the sugar juice after first carbonation by filtering off the so-called carbonation scum which is washed with water. The sweetened-off carbonation scum is withdrawn from the process, and a selectable portion thereof is removed and deposited.
(b) A portion of the sweetened-off carbonation scum in an amount between zero and 100 % of its total amount is separated and diluted to a density of from 1010 to 1350 kg/m³.
(c) The obtained carbonation scum solution is adjusted in a suitable device to a pH value of from 6.00 to 11.20.
(d) The chemically treated liquid of carbonation scum is then divided in one or more cyclones and thickened. The thin liquid portion is recirculated in an amount of from zero to 100 %.
(e) The thick portion obtained from the cyclone(s) is activated in a reactor by means of lime milk.
(f) The thus obtained activated mixture is supplied to the epuration line in parallel with the lime milk, the ratio between the supplied lime milk amount and the amount of said mixture varying between zero and 100 %.

By the treatment according to the present invention, the adsorptive capacity of the carbonation scum is reactivated. In this way, a part of the calcium carbonate obtained in the first carbonation step of the sugar juice clarification (epuration) is replaced.

In the following, the invention will be further explained with reference to the accompanying drawings.

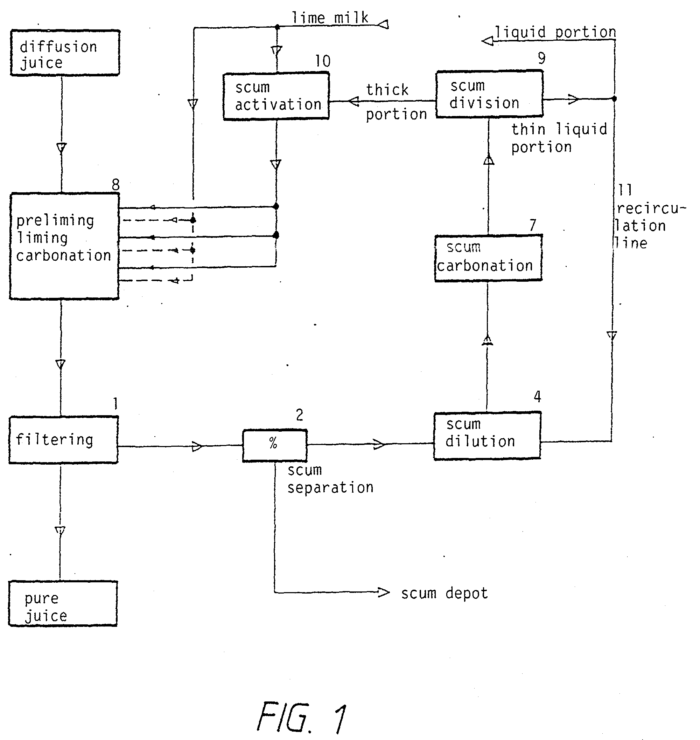

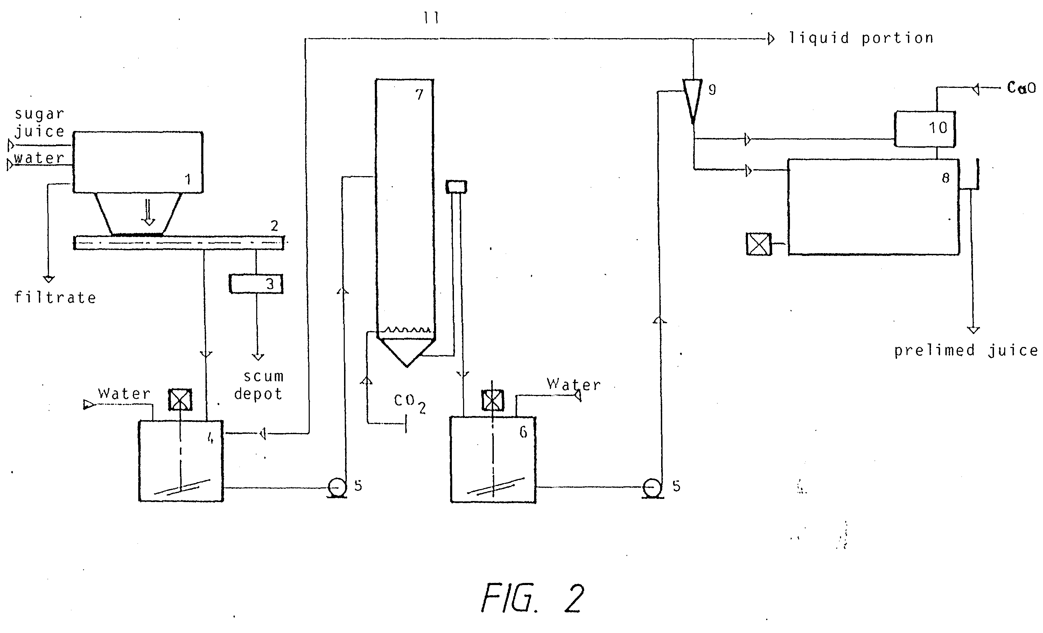

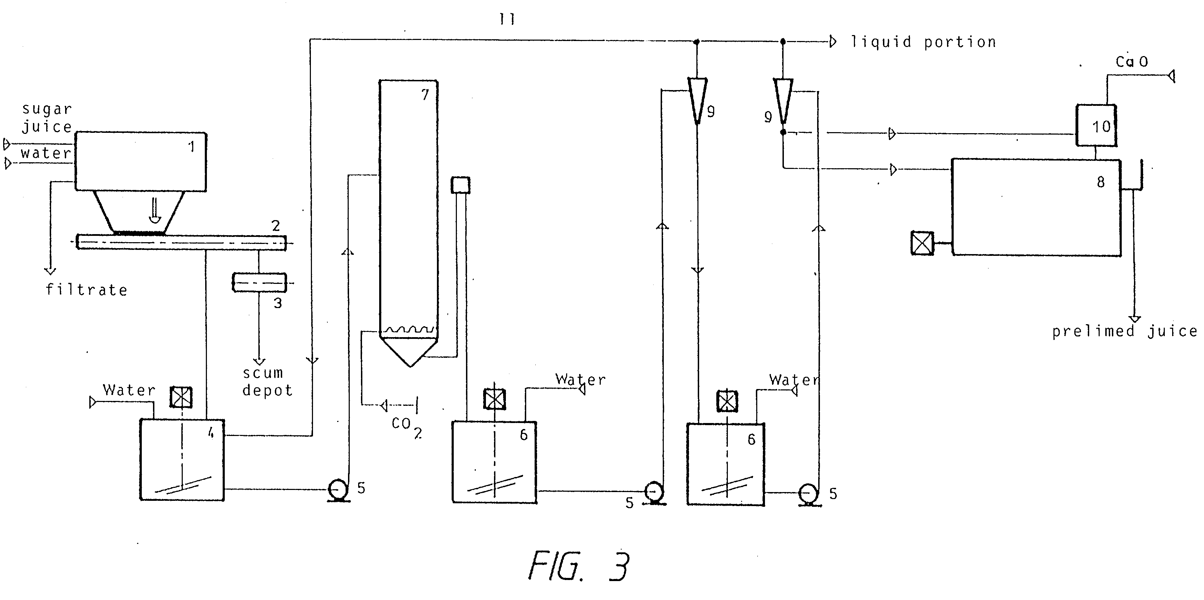

Fig. 1 is a schematic representation of the basic arrangement of the sugar juice epuration line and the carbonation scum regeneration according to the present invention, and Figs. 2 and 3 are schematic flowcharts relating to the apparatus of the present invention, where Fig. 2 shows a one-stage process and Fig. 3 shows a two-stage process for the separation of the regnerated carbonation scum.

The left-hand column of Fig. 1 shows the common diffusion juice epuration line, comprising the steps of preliming, liming and carbonation (8), and the filtering of the carbonation scum (1), whereby a purified sugar juice is obtained.

The obtained carbonation scum is separated by dividing means (2) into a portion to be deposited and a portion to be regenerated which is fed to the diluting means (4). The diluted material is then supplied to a carbonation step (7) and subsequently to separation means (9) where the carbonation scum liquid is separated into a thick portion and a liquid portion. The thick portion is fed to activation means (10) where the carbonation scum is activated by means of lime milk. The activated material is then dosed into the epuration line, together with the lime milk which is also introduced.

The thin liquid portion obtained after the separation means (9) is recycled into the dilution stage (4) partially or in its entirety.

The apparatus shown in Fig. 2 comprises a filter press 1 wherein the carbonation scum is separated from the sugar juice, and washed with water or recirculation liquid for removing sugar substances therefrom.

The carbonation scum is transported by means of conveyors 2 and 3, where the conveyor 3 removes the part of the scum to be deposited, and the conveyor 2 transports the portion to be regenerated to an agitated tank 4 where a dilution with water is effected. The diluted material is pumped through a centrifugal pump 5 to a carbonator 7 supplied with CO₂, and passes then through an agitated tank 6 and a further centrifugal pump 5 to a hydrocyclone 9 which separates the thick portion from the thin liquid portion. The liquid portion is recirculated via a recirculation line 11 into the agitated tank 4; the non-recirculated portion of this liquid is waste liquid supplied to a waste liquid line.

The thick portion issuing from the hydrocyclone 9 may be fed either directly or through an activator 10 supplied with lime milk (CaO) to the common prelimer 8 from which prelimed sugar juice is obtained.

Fig. 3 shows the same apparatus as Fig. 2, and accordingly the same reference numerals are used. The only difference therebetween is that the separation of the thick portion from the liquid carbonation scum is carried out with use of a two-stage hydrocyclone system.

The liquid scum withdrawn from the agitated tank 6 is fed through a centrifugal pump 5 to a first hydrocyclone 9, the outlet of which for the thick product is connected through an agitated tank 6 to the inlet of a second hydrocyclone 9'.

The outlet of the second hydrocyclone 9' for the thick portion is connected to the prelimer 8 and to the activator 10 which, in turn, is connected with the prelimer 8.

The liquid portion obtained from the liquid outlets of the hydrocyclones 9, 9' is supplied to the recirculation line 11 which is also connected with the waste liquid line.

The invention is applicable in the sugar manufacture, and particularly in the field of sugar juice clarification, and leads to a considerably better economy in both manufacturing and investment expenses. Thus, the invention makes it possible to extend the manufacturing capacities of sugar factories.

## Claims

1. A method for producing sugar with reclaiming and recycling of carbonation scum for reusing it in the sugar production, comprising the following steps:
(A) Separating the carbonation scum from the sugar juice after the first carbonation;
(B) diluting a portion or the total amount of the carbonation scum in an amount of up to 100 % of the total amount to a density of 1010 to 1350 kg/m³;
(C) adjusting the pH value of the diluted carbonation scum to 6.0 to 11.2;
(D) separating the treated carbonation scum liquid into a thick portion and a thin portion,
(E) activating the carbonation scum by means of calcium oxide or calcium hydroxide,
and
(F) dosing a portion or the total amount of the thick portion into the epuration line,
characterized in that the thin liquid portion obtained in step (D) is recirculated into the dilution stage (B) in an amount of up to 100 %.

2. The method according to claim 1,
characterized in that the thick portion of the regenerated carbonation scum is dosed in step F into the preliming and/or the liming stage and/or the carbonation stage of the sugar juice processing, the regenerated carbonation scum preferably being dosed together with or at the same time as the lime milk addition.

3. The method according to claims 1 and 2,
characterized in that in step A, the carbonation scum is separated from the sugar juice by filtration and is washed with water for removing sugar substances.

4. The method according to claims 1 to 3,
characterized in that the diluted carbonation scum, optionally after processing steps C, D and contingently E, and preferably in step C, is carbonated.

5. An apparatus for carrying out the method of claims 1 to 4,
comprising
- separation means (1) for separating the carbonation scum from the sugar juice after the first carbonation;
- dilution means (4) for diluting the separated carbonation scum, connected to the separation means (1);
- pH adjusting means (6, 7) for adjusting the pH value of the diluted carbonation scum to a value of 6.0 to 11.2;
- separation means (9) for separating the treated carbonation scum liquid into a thick portion and a liquid portion, connected to the pH adjusting means (6; 7),
- activation means (10) connected to the separation means (9), for activating the carbonation scum by means of calcium oxide and/or calcium hydroxide, or lime, respectively,
and
- dosing means for dosing the thick portion of the regenerated carbonation scum into the epuration line,
characterized in that
it further comprises a recirculation line (11) connected between the separation means (9) and the dilution means (4), for recirculating at least a part of the liquid portion of the carbonation scum liquid obtained from the separation means (9) into the dilution means (4).

6. The apparatus according to claim 5,
characterized in that it further comprises dividing means (2) for dividing the total amount of carbonation scum obtained from the separation means (1) into a portion to be deposited and a portion to be regenerated and recirculated into the sugar juice epuration line.

7. The apparatus according to claims 5 and 6,
characterized by one or more of the following features:
- The separation means (1) are a filter or a filter press, preferably equipped with means for washing the separated carbonation scum;
- the dividing means (2) comprise a conveyor;
- the dilution means (4) are an agitated tank;
- the pH adjusting means (6, 7) are or comprise a carbonator (7);
- the separation means (9) are a hydrocyclone or a combination of two hydrocyclones (9), preferably with an agitated tank (6) connected between the thick product outlet of the first hydrocyclone and the inlet of the second hydrocyclone;
- the activation means (10) comprise a reactor for contacting or mixing the thick portion of the treated carbonation scum with calcium oxide or calcium hydroxide, or lime, respectively.

## Patentansprüche

1. Verfahren für die Herstellung von Zucker unter Rückgewinnung und Rückführung des Carbonatationsschlamms, um diesen bei der Zuckerherstellung wieder zu verwenden, das folgende Schritte umfaßt:
(A) Abtrennen des Carbonatationsschlamms vom Zuckersaft nach der ersten Carbonatation,
(B) Verdünnen eines Teils oder der gesamten Menge des Carbonatationsschlamms in einer Menge von bis zu 100 % der Gesamtmenge bis zu einer Dichte von 1010 bis 1350 kg/m³,
(C) Einstellen des pH-Werts des verdünnten Carbonatationsschlamms auf 6,0 bis 11,2,
(D) Auftrennen der behandelten Carbonatationsschlamm-Flüssigkeit in einen dickflüssigen und einen dünnflüssigen Teil,
(E) Aktivieren des Carbonatationsschlamms mit Hilfe von Calciumoxid oder Calciumhydroxid
und
(F) Eindosieren eines Teils oder der Gesamtmenge des dickflüssigen Teils in die Reinigungsleitung,
dadurch gekennzeichnet, daß der in Schritt D erhaltene dünnflüssige Teil in einer Menge von bis zu 100 % in die Verdünnungsstufe B rückgeführt wird.

2. Verfahren nach Anspruch 1, dadurch gekennzeichnet, daß der dickflüssige Teil des regenerierten Carbonatationsschlamms in Schritt F in die Vorkalkungs- und/oder Kalkungsstufe und/oder die Carbonatationsstufe der Zuckersaftverarbeitung dosiert wird, wobei der regenerierte Carbonatationsschlamm vorzugsweise zusammen mit oder gleichzeitig mit der Kalkmilchzugabe zudosiert wird.

3. Verfahren nach Anspruch 1 und/oder 2, dadurch gekennzeichnet, daß in Schritt A der Carbonatationsschlamm von dem Zuckersaft durch Filtration abgetrennt wird und zur Entfernung von Zuckersubstanzen mit Wasser gewaschen wird.

4. Verfahren nach einem der Ansprüche 1 bis 3, dadurch gekennzeichnet, daß der verdünnte Carbonatationsschlamm, wahlweise nach Durchführen der Schritte C, D und eventuell E und vorzugsweise in Schritt C carbonatiert wird.

5. Vorrichtung zur Durchführung des Verfahrens der Ansprüche 1 bis 4, die umfaßt:
- Abtrennungsmittel (1) zur Abtrennung des Carbonatationsschlamms vom Zuckersaft nach der ersten Carbonatation,
- Verdünnungsmittel (4) zur Verdünnung des abgetrennten Carbonatationsschlamms, die mit den Abtrennungsmitteln (1) verbunden sind,
- Mittel (6, 7) zur Einstellung des pH-Werts des verdünnten Carbonatationsschlamms auf einen Wert von 6,0 bis 11,2,
- Auftrennungsmittel (9) zur Auftrennung der behandelten Carbonatationsschlamm-Flüssigkeit in einen dickflüssigen Teil und einen dünnflüssigen Teil, die mit den Mitteln (6, 7) zur Einstellung des pH-Werts verbunden sind,
- Aktivierungsmittel (10), die mit den Auftrennungsmitteln (9) verbunden sind, zur Aktivierung des Carbonatationsschlamms mit Hilfe von Calciumoxid und/oder Calciumhydroxid bzw. Kalk
und
- Dosierungsmittel für die Zudosierung des dickflüssigen Teils des regenerierten Carbonatationsschlamms in die Reinigungsleitung,
dadurch gekennzeichnet, daß die Vorrichtung weiterhin eine Rückführungsleitung (11), die die Auftrennungsmittel (9) mit den Verdünnungsmitteln (4) verbindet, für die Rückführung mindestens eines Teils des dünnflüssigen Teils der Carbonatationsschlamm-Flüssigkeit, der aus den Auftrennungsmitteln (9) erhalten wird, in die Verdünnungsmittel (4) umfaßt.

6. Vorrichtung nach Anspruch 5, dadurch gekennzeichnet, daß sie ferner Aufteilungsmittel (2) zur Aufteilung der Gesamtmenge des Carbonatationsschlamms, der in den Abtrennungsmitteln (1) erhalten wird, in einen Teil, der deponiert wird, und einen Teil, der regeneriert und in die Zuckersaft-Reinigungsleitung rückgeführt wird, umfaßt.

7. Vorrichtung nach Anspruch 5 und/oder 6, die durch eines oder mehrere der folgenden Merkmale gekennzeichnet ist:
- Die Abtrennungsmittel (1) sind ein Filter oder eine Filterpresse, vorzugsweise ausgerüstet mit Mitteln zum Waschen des abgetrennten Carbonatationsschlamms,
- die Aufteilungsmittel (2) umfassen Fördermittel,
- bei den Verdünnungsmitteln (4) handelt es sich um einen Tank mit Rühreinrichtung,
- die Mittel (6, 7) zur Einstellung des pH-Werts sind oder enthalten einen Carbonateur,
- die Auftrennungsmittel (9) sind ein Hydrozyklon (9) oder eine Kombination aus zwei Hydrozyklonen (9), vorzugsweise mit einem Tank (6) mit Rühreinrichtung, der zwischen dem Auslaß des dickflüssigen Produkts des ersten Hydrozyklons und dem Einlaß des zweiten Hydrozyklons angeordnet ist,
- die Aktivierungsmittel umfassen einen Reaktor, in dem der dickflüssige Teil des behandelten Carbonatisierungsschlamms mit Calciumoxid oder Calciumhydroxid bzw. Kalkmilch in Kontakt gebracht oder vermischt wird.

## Revendications

1. Procédé pour la production de sucre avec régénération et recyclage de l'écume de carbonatation de manière à la réutiliser dans la production du sucre, comprenant les étapes suivantes :
(A) séparation de l'écume de carbonatation par rapport au jus de sucre après la première carbonatation ;
(B) dilution d'une partie ou de la totalité de l'écume de carbonatation, dans une proportion pouvant atteindre 100 % de la quantité totale, pour obtenir une densité de 1010 à 1350 kg/m³ ;
(C) réglage de la valeur de pH de l'écume de carbonatation diluée, de 6,0 à 11,2 ;
(D) séparation du liquide d'écume de carbonatation traité, en une partie épaisse et une partie claire ;
(E) activation de l'écume de carbonatation au moyen d'oxyde de calcium ou d'hydroxyde de calcium, et
(F) dosage d'une partie ou de la totalité de la partie épaisse, dans la chaîne d'épuration,
caractérisé en ce que
la partie liquide claire obtenue dans l'étape (D) est recyclée dans l'étage de dilution (B), dans une proportion pouvant atteindre 100 %.

2. Procédé selon la revendication 1,
caractérisé en ce que
la partie épaisse de l'écume de carbonatation régénérée est dosée à l'étape F dans l'étage de préchaulage et/ou de chaulage et/ou dans l'étage de carbonatation du traitement du jus de sucre, l'écume de carbonatation régénérée étant de préférence dosée avec ou en même temps que l'addition du lait de chaux.

3. Procédé selon les revendication 1 et 2,
caractérisé en ce qu'
à l'étape (A), l'écume de carbonatation est séparée du jus de sucre par filtration puis lavée à l'eau pour en retirer les substances de sucre.

4. Procédé selon les revendications 1 à 3,
caractérisé en ce que
l'écume de carbonatation diluée est carbonatée facultativement après les étapes de traitement C, D et éventuellement E, et de préférence dans l'étape C.

5. Appareil pour la mise en oeuvre du procédé selon les revendications 1 à 4,
comprenant :
• des moyens de séparation (1) pour séparer l'écume de carbonatation du jus de sucre après la première carbonatation ;
• des moyens de dilution (4) pour diluer l'écume de carbonatation séparée, ces moyens étant reliés aux moyens de séparation (1) ;
• des moyens de réglage de pH (6, 7) pour régler la valeur de pH de l'écume de carbonatation diluée, à une valeur de 6,0 à 11,2 ;
• des moyens de séparation (9) pour séparer le liquide d'écume de carbonatation traité, en une partie épaisse et une partie liquide, ces moyens de séparation étant reliés aux moyens de réglage de pH (6, 7) ;
• des moyens d'activation (10) reliés aux moyens de séparation (9), pour activer l'écume de carbonatation respectivement au moyen d'oxyde de calcium et/ou d'hydroxyde de calcium, ou de chaux ; et
• des moyens de dosage pour doser la partie épaisse de l'écume de carbonatation régénérée, dans la chaîne d'épuration ;
caractérisé en ce qu'
il comprend en outre une conduite de recyclage (11) connectée entre les moyens de séparation (9) et les moyens de dilution (4), pour recycler dans ces moyens de dilution (4) une partie au moins de la partie liquide du liquide d'écume de carbonatation obtenu à partir des moyens de séparation (9).

6. Appareil selon la revendication 5,
caractérisé en ce qu'
il comprend en outre des moyens de division (2) pour diviser la quantité totale d'écume de carbonatation obtenue à partir des moyens de séparation (1), en une partie à mettre en dépôt et une partie à régénérer et à recycler dans la chaîne d'épuration du jus de sucre.

7. Appareil selon les revendications 5 et 6,
caractérisé par
une ou plusieurs des caractéristiques suivantes :
• les moyens de séparation (1) sont un filtre ou un filtre-presse, de préférence équipés de moyens pour laver l'écume de carbonatation séparée ;
• les moyens de division (2) comprennent un convoyeur ;
• les moyens de dilution (4) sont un réservoir à agitation ;
• les moyens de réglage de pH (6, 7) sont ou comprennent un carbonatateur (7) ;
• les moyens de séparation (9) sont un hydrocyclone ou une combinaison de deux hydrocyclones (9), de préférence avec un réservoir à agitation (6) monté entre la sortie de produit épais du premier hydrocyclone, et l'entrée du second hydrocyclone ;
• les moyens d'activation (10) comprennent un réacteur pour amener en contact ou mélanger la partie épaisse de l'écume de carbonatation traitée, respectivement avec de l'oxyde de calcium ou de l'hydroxyde de calcium ou de la chaux.
